Europäisches Patentamt

European Patent Office

Office européen des brevets

(19)

(11) Numéro de publication: **0 256 927 B1**

# (12) FASCICULE DE BREVET EUROPEEN

(45) Date de publication de fascicule du brevet: **30.09.92**  (51) Int. Cl.⁵: **G02F 1/133**, G09G 3/36

(21) Numéro de dépôt: **87401797.3**

(22) Date de dépôt: **31.07.87**

(54) **Dispositif d'affichage matriciel comprenant deux paquets d'électrodes lignes et deux électrodes colonnes par élément image et son procédé de commande.**

(30) Priorité: **01.08.86 FR 8611230**

(43) Date de publication de la demande:
**24.02.88 Bulletin 88/08**

(45) Mention de la délivrance du brevet:
**30.09.92 Bulletin 92/40**

(84) Etats contractants désignés:
**CH DE GB IT LI NL**

(56) Documents cités:
**EP-A- 0 143 039**
**EP-A- 0 202 992**
**WO-A-85/02931**

**PROCEEDINGS OF THE SOCIETY FOR INFOR-MATION DISPLAY, vol. 26, no. 3, 1985, pages 201-207, SID, Hartsdale, New York, US; S. BISOTTO et al.: "Using redundancy when designing active-matrix-addressed LCDs"**

**PATENT ABSTRACTS OF JAPAN, vol.9, no. 246 (P-393)[1969], 3 octobre 1985; & JP-A- 60 97 322**

**1984 SID INTERNATIONAL SYMPOSIUM DI-GEST OF TECHNICAL PAPERS, Proceedings**

**of the International Symposium on Informa-tion Display, San Francisco, 5-7 juin 1984, vol. 15, édition 1, pages 142-144, Palisades Institute for Research Services, Inc., New York, US; C. KORNFELD: "A defect-tolerant active-matrix electrophoretic display"**

(73) Titulaire: **COMMISSARIAT A L'ENERGIE ATO-MIOUE Etablissement de Caractère Scientifi-que Technique et Industriel**
**31/33, rue de la Fédération**
**F-75015 Paris(FR)**

(72) Inventeur: **Clerc, Jean-Frédéric**
**7, rue Brenier**
**F-38120 Saint Egrève(FR)**
Inventeur: **Perrin, Aimé**
**Le Crêt de Chaume**
**F-38330 Saint Ismier(FR)**

(74) Mandataire: **Mongrédien, André et al**
**c/o BREVATOME 25, rue de Ponthieu**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention a pour objet un dispositif d'affichage matriciel comprenant deux paquets d'électrodes lignes et deux électrodes colonnes par élément image.

L'invention s'applique en optoélectronique et principalement dans la commande de cellules à cristaux liquides utilisées notamment comme convertisseur d'informations électriques en informations optiques, dans le traitemennt des images optiques en temps réel et pour l'affichage analogique.

De façon plus précise, l'invention concerne un dispositif d'affichage matriciel utilisant un matériau d'affichage possèdant une propriété optique et comprenant une pluralité d'éléments images commandés par des interrupteurs tels que des transistors en couche mince.

La propriété optique du matériau d'affichage utilisé est par exemple une opacité, un indice de réfraction, une transparence, une diffusion, une diffraction, une convergence, etc... Par ailleurs, ce matériau peut être un corps solide ou liquide, amorphe ou cristallin.

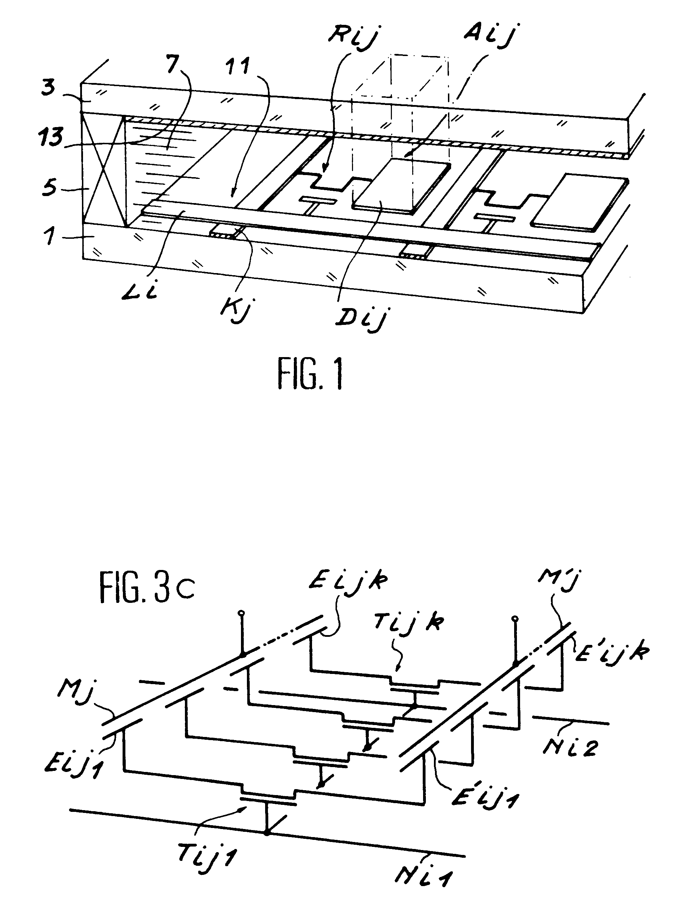

La figure 1 représente schématiquement un exemple de dispositif d'affichage matriciel connu de ce type.

Sur la figure 1 sont représentées deux parois isolantes, une première paroi 1 et une deuxième paroi 3 en regard l'une de l'autre, maintenues écartées et scellées par un joint 5. Entre ces parois est intercalée une couche d'un matériau d'affichage 7 possèdant une propriété optique.

Sur la face interne de l'une des parois 1 sont répartis n conducteurs lignes parallèles, notés $L_i$ et m conducteurs colonnes parallèles, notés $K_j$, croisés avec les conducteurs lignes, i et j étant des entiers tels que $1 \leq i \leq n$ et $1 \leq j \leq m$ ; les conducteurs lignes et les conducteurs colonnes véhiculent des signaux électriques appropriés à l'excitation du matériau 7 et générés par des moyens d'adressage (non représentés).

Au croisement 11 de chaque conducteur ligne $L_i$ avec chaque conducteur colonne $K_j$ se trouve un interrupteur $R_{ij}$ tel qu'un transistor en couche mince, relié à une électrode $D_{ij}$.

Par ailleurs, la face interne de l'autre paroi 3 est recouverte d'un matériau conducteur servant de contre-électrode 13. Cette contre-électrode est portée à un potentiel de référence.

Un élément image $A_{ij}$ est défini dans ce dispositif par la région de recouvrement d'une électrode $D_{ij}$ avec la contre électrode 13, l'électrode $D_{ij}$ et la contre électrode 13 formant respectivement les deux armatures d'un condensateur entre lesquelles est intercalé le matériau d'affichage.

Dans le cas particulier où le matériau d'affichage est un film de cristal liquide, pour éviter de le détériorer, la contre électrode 13 est portée à un potentiel de référence dont la valeur est inversée périodiquement et les conducteurs lignes et les conducteurs colonnes véhiculent des tensions alternatives.

Pour sélectionner un élément image $A_{ij}$ particulier du dispositif, on envoie sur le conducteur ligne $L_i$ un signal électrique qui sélectionne l'état passant de l'ensemble des transistors reliés à ce conducteur ligne et en particulier l'état passant du transistor $R_{ij}$ associé à cet élément image. Ce transistor transmet alors à l'électrode $D_{ij}$ à laquelle il est relié le signal électrique provenant de la colonne $K_j$. Entre l'électrode $D_{ij}$ et la contre électrode 13, il apparaît un champ électrique qui va provoquer une orientation collective des molécules, notamment de cristal liquide intercalées entre les armatures du condensateur formé par l'électrode $D_{ij}$ et la contre électrode 13, lorsque le signal provenant de la colonne $K_j$ est supérieur ou égal à la tension de seuil correspondant à la valeur minimale nécessaire pour exciter le matériau 7. Cette orientation collective va modifier la propriété optique du matériau 7 à l'élément image $A_{ij}$.

En utilisant l'orientation sélective des molécules et l'excitation ponctuelle du matériau d'affichage, on fait apparaître une image sur l'ensemble du dispositif d'affichage en la définissant point par point.

De tels dispositifs d'affichage permettent d'adresser un très grand nombre d'éléments images. Cependant, ces dispositifs présentent un nombre important d'éléments images défectueux se présentant soit sous la forme de lignes et/ou de colonnes entières d'éléments image défectueux soit d'éléments images défectueux isolés.

Le mauvais fonctionnement d'une ligne et d'une colonne d'éléments image est dû soit à des courts-circuits entre les conducteurs lignes et les conducteurs colonnes qui se croisent, chaque court-circuit mettant hors d'état une ligne et une colonne d'éléments images, soit à des transistors en court-circuit, chaque transistor en court-circuit mettant également hors d'état une ligne et une colonne d'éléments images. Le mauvais fonctionnement d'un élément image isolé est dû par exemple à un défaut d'isolation du transistor correspondant à cet élément.

Pour combattre ces défauts, de nombreux dispositifs d'affichage ont été réalisés dans lesquels le nombre de conducteurs lignes et de conducteurs colonnes adressant un élément image a été multiplié, entraînant une augmentation du nombre de transistors associés à un élément image. Cette solution présente de nombreux inconvénients comme par exemple l'augmentation de la complexité et du coût du dispositif d'affichage sans pour autant éliminer toutes les sources de défaut. En effet, si par exemple les deux conducteurs colonnes d'un motif redondant double correspondant à l'adressage d'une même colonne d'éléments images, sont associés respectivement à un transistor défectueux, toute la colonne d'éléments images sera hors d'état. De plus, de tels dispositifs n'éliminent pas les éléments image défectueux isolés.

Cette solution nécessite par ailleurs, l'utilisation de tests en cours de réalisation du dispositif d'affichage, pour mettre en évidence les éléments défectueux et les déconnecter, ce qui augmente également le coût de réalisation du dispositif d'affichage et qui est source de défauts ultérieurs.

Dans le document FR-A2 553 218, est décrit un dispositif d'affichage matriciel évitant le croisement des conducteurs lignes avec les conducteurs colonnes sur la face interne de l'une des parois du dispositif d'affichage. Pour cela, sur l'une des parois du dispositif d'affichage sont disposées des conducteurs colonnes parallèles auxquels sont associées des électrodes disposées suivant une première matrice et sur l'autre paroi sont disposées des conducteurs lignes parallèles reliés par des transistors à une seconde matrice d'électrodes en regard de la première matrice d'électrodes ; un élément image de ce dispositif est défini par la zone de recouvrement d'une électrode de la première matrice et d'une électrode de la seconde matrice.

Ce dispositif d'affichage permet d'éviter les courts-circuits entre un conducteur ligne et un conducteur colonne, mais un transistor en court-circuit peut cependant mettre hors d'état un conducteur ligne entier et de ce fait une ligne d'éléments images. De plus, ce dispositif ne permet pas d'éviter les éléments image défectueux isolés.

Dans la demande de brevet français FR-A-2581783 au nom du même demandeur est décrit un dispositif d'affichage matriciel permettant d'éviter tout croisement entre des conducteurs lignes et des conducteurs colonnes sur la face interne d'une paroi du dispositif d'affichage et d'éviter qu'un transistor en court-circuit mette hors d'état une ligne ou une colonne d'éléments images.

Sur la face interne de l'une des parois de ce dispositif sont disposés n conducteurs lignes parallèles, chaque conducteur ligne étant relié à m transistors connectés chacun à une électrode d'une première famille et à une électrode d'une deuxième famille, ces électrodes étant juxtaposées audit conducteur ligne. Sur la face interne de l'autre paroi de ce dispositif sont disposées une première famille de m conducteurs colonnes parallèles et une deuxième familles de m conducteurs colonnes parallèles, les conducteurs colonnes de la première famille étant alternés avec les conducteurs colonnes de la deuxième famille, une des deux familles des conducteurs colonnes étant portée à un potentiel de référence. les conducteurs colonnes des première et deuxième familles étant croisés avec les conducteurs lignes, chaque conducteur colonne de la première famille est en regard de n électrodes de la première famille et chaque conducteur colonne de la deuxième famille est en regard de n électrodes de la deuxième famille ; un élément image de ce dispositif est défini par la zone de recouvrement de deux conducteurs colonnes respectivement de la première et de la deuxième familles avec deux électrodes respectivement de la première et de la deuxième familles connectées par un transistor à un conducteur ligne.

Un tel dispositif ne permet pas cependant d'éviter des éléments images isolés mauvais.

L'invention a donc pour but de remédier à cet inconvénient en réalisant un dispositif permettant d'éviter la déficience à la fois de lignes ou de colonnes d'éléments images et d'éléments images isolés, notamment en divisant chacune des deux électrodes et le transistor d'un élément image du dispositif d'affichage décrit dans le document FR-A-2 581 783 en plusieurs petites électrodes et autant de petits transistors.

De façon plus précise, l'invention telle que décrite à la revendication 1 a pour objet un dispositif d'affichage matriciel comprenant un matériau électro-optique possédant une propriété optique, intercalé entre une première paroi et une deuxième paroi isolantes dont l'une au moins est transparente, maintenues écartées l'une de l'autre, caractérisé en ce que sur la face interne de la première paroi sont disposés n conducteurs lignes parallèles, chaque conducteur ligne étant relié par k.m interrupteurs à k.m électrodes d'une première famille regroupées en m paquets de k électrodes parallèles chacun et à k.m électrodes d'une deuxième famille regroupées en m paquets de k électrodes parallèles chacun, les m paquets d'électrodes de la première famille et les m paquets d'électrodes de la deuxième famille étant juxtaposés audit conducteur ligne et alternés entre eux de façon à ce que chaque électrode $E_{ijl}$ d'un paquet $P_{ij}$ d'électrodes de la première famille et chaque électrode $E'_{ijl}$ d'un paquet $P'_{ij}$ d'électrodes de la deuxième famille soient reliées par un interrupteur $T_{ijl}$ à un conducteur ligne $N_i$ avec i, j, l entiers tels que $1 \leq i \leq n$, $1 \leq j \leq m$ et $1 \leq l \leq k$ et en ce que sur la face interne de la deuxième paroi sont disposées une première famille de m conducteurs colonnes parallèles et une deuxième famille de m conducteurs colonnes parallèles, les conducteurs colonnes de la deuxième famille étant alternés avec les conducteurs colonnes de la première famille, une des deux familles des conducteurs colonnes étant portée à un potentiel de référence par un moyen de polarisation, les conducteurs colonnes des première et deuxième familles étant croisés avec les conducteurs lignes, chaque conducteur colonne de la première famille est en regard de n paquets d'électrodes de la première famille et chaque conducteur colonne de la deuxième famille est en regard de n paquets d'électrodes de la deuxième famille, un élément image étant défini par la zone de recouvrement de deux conducteurs colonnes respectivement de la première et de la deuxième familles avec respectivement un paquet de k électrodes de la première famille et un paquet de k électrodes de la deuxième famille reliées par k interrupteurs au conducteur ligne correspondant, lesdits conducteurs véhiculant des signaux appropriés à l'excitation du matériau émis par des moyens de commande de ligne et de colonne.

Un élément image d'un dispositif d'affichage conforme à l'invention est un ensemble de k points images, chaque point image correspondant à l'association d'une électrode de la première famille et d'une électrode de la deuxième famille avec un interrupteur, les k points images d'un élément image étant soumis en même temps aux mêmes signaux d'excitation. Bien entendu, dans les dispositifs d'affichage connus, décrits précédemment le terme d'élément image est équivalent à celui de point image, puisque chaque élément image d'un de ces dispositifs ne comprend qu'un point image correspondant à l'association d'une électrode avec un interrupteur ou d'une électrode d'une première famille et d'une électrode d'une deuxième famille avec un interrupteur.

Les deux paquets d'électrodes lignes par élément image du dispositif d'affichage de l'invention sont formés par un paquet de k électrodes de le première famille et un paquet de k élctrodes de la deuxième famille ; et les deux conducteurs colonnes par élément image sont formés par un conducteur colonne de la première famille et un conducteur colonne de la deuxième famille.

De façon avantageuse, le matériau électro-optique est un film de cristal liquide dont la propriété optique dépend du champ électrique qui lui est appliqué.

Selon un mode de réalisation du dispositif d'affichage, chaque interrupteur $T_{ijl}$ avec i, j, l entiers tels que $1 \leq i \leq n$, $1 \leq j \leq m$ et $1 \leq l \leq k$ est un transistor en couche mince dont la grille est reliée au conducteur ligne $N_i$ dont la deuxième borne est reliée à l'électrode $E_{ijl}$ du paquet $P_{ij}$ et dont la troisième borne est connectée à l'électrode $E'_{ijl}$ du paquet $P'_{ij}$.

De préférence, l'ensemble des transistors associés aux électrodes des première et deuxième familles correspondant à un élément image sont reliées ensemble par leur grille, au moins un desdits transistors étant relié en outre par sa grille au conducteur ligne correspondant.

De façon avantageuse, chaque conducteur ligne se divisant en une première et en une deuxième parties disposées de part et d'autres des m paquets d'électrodes de la première famille et des m paquets d'électrodes de la deuxième famille auxquelles il est relié, les transistors associés aux électrodes des première et deuxième familles correspondant à un élément image, reliés entre eux par leur grille, sont reliés en outre par la grille du transistor associé à l'électrode de la première et à l'électrode de la deuxième familles juxtaposées à la première partie du conducteur ligne, à cette première à partie et par la grille du transistor associé à l'électrode de la première et à l'électrode de la deuxième familles juxtaposées à la deuxième partie du conducteur ligne, à cette deuxième partie.

Selon un mode de réalisation du dispositif d'affichage matriciel, les électrodes des première et deuxième familles de chaque élément image sont formées respectivement par un pavé conducteur et par une excroissance conductrice, l'excroissance d'une électrode de la première famille étant parallèle et juxtaposée à l'excroissance de l'électrode de la deuxième famille avec laquelle elle est associée, l'ensemble des excroissances des électrodes des première et deuxième familles sont recouvertes au moins en partie, successivement par une couche d'un matériau semi-conducteur, par une couche d'un matériau isolant et par une couche d'un matériau conducteur, ces trois couches formant avec les excroissances des électrodes du dispositif, les transistors dudit dispositif.

De préférence, le matériau semi-conducteur est du silicium amorphe, le matériau isolant est par exemple un oxyde ou du nitrure de silicium et le matériau conducteur est un métal tel que de l'aluminium ou du chrome.

De façon avantageuse, entre les excroissances des électrodes des première et deuxième familles et la couche de matériau semi-conducteur est intercalée une couche de silicium amorphe dopé.

Selon un autre mode de réalisation du dispositif d'affichage les conducteurs colonnes et/ou les électrodes des première et deuxième familles sont en un matériau conducteur transparent, tel que par exemple de l'oxyde d'indium.

De façon avantageuse, le pas entre les électrodes d'un même paquet est inférieur ou égal à une valeur seuil correspondant au pas maximum permettant d'intégrer un défaut associé à une électrode de la première famille et à une électrode de la deuxième famille reliées par un interrupteur. Le pas entre électrodes correspond à la distance entre une extrémité d'une électrode et la même extrémité d'une électrode voisine de celle-ci, du même paquet.

Pour commander la propriété optique du matériau à l'élément image $I_{ij}$ avec i, j entiers tels que $1 \leq i \leq n$ et $1 \leq j \leq m$, on applique sur le conducteur ligne $N_i$ un potentiel $V_{Gi}$ et sur les conducteurs colonnes $M_j$ et $M'_j$ des première et deuxième familles les potentiels $V_R$ et $V_{Fj}$ avec $V_{Gi} > V_R$, $V_{Gi} > V_{Fj}$ et $V_{Fj} \neq V_R$ pendant un temps ligne $Tl = T/n$, T étant la période d'adressage d'un élément image et avec $V_{Gi} < V_R$ et $V_{Gi} < V_{Fj}$ en dehors de ce temps ligne Tl et on applique pendant le temps ligne Tl sur les autres conducteurs lignes un potentiel $V_{GS}$ et sur les autres conducteurs colonnes les potentiels $V_R$ et $V_{Fk}$ tels que $V_{GS} < V_R$, $V_{GS} < V_{Fk}$ et $V_{GS} < V_{Gi}$.

D'autres caractéristiques et avantages de l'invention ressortiront mieux de la description qui va suivre donnée à titre purement illustratif et non limitatif en référence aux figures annexées dans lesquelles :
- la figure 1 déjà décrite représente schématiquement et en perspective un dispositif d'affichage de type connu ;
- les figures 2a et 2b représentent schématiquement respectivement les faces internes de la première paroi et de la deuxième paroi d'un exemple de réalisation d'un dispositif d'affichage conforme à l'invention ;
- les figures 3a, 3b et 3c représentent schématiquement respectivement un élément image du dispositif d'affichage conforme à l'invention des figures 2a et 2b, une coupe éclatée de la structure de cet élément image, et le schéma électrique équivalent de cet élément image ; et
- les figures 4a et 4b représentent schématiquement, en coupe, l'orentation des molécules du matériau d'affichage respectivement dans un dispositif d'affichage connu et dans un dispositif d'affichage conforme à l'invention, comportant un point image défectueux.

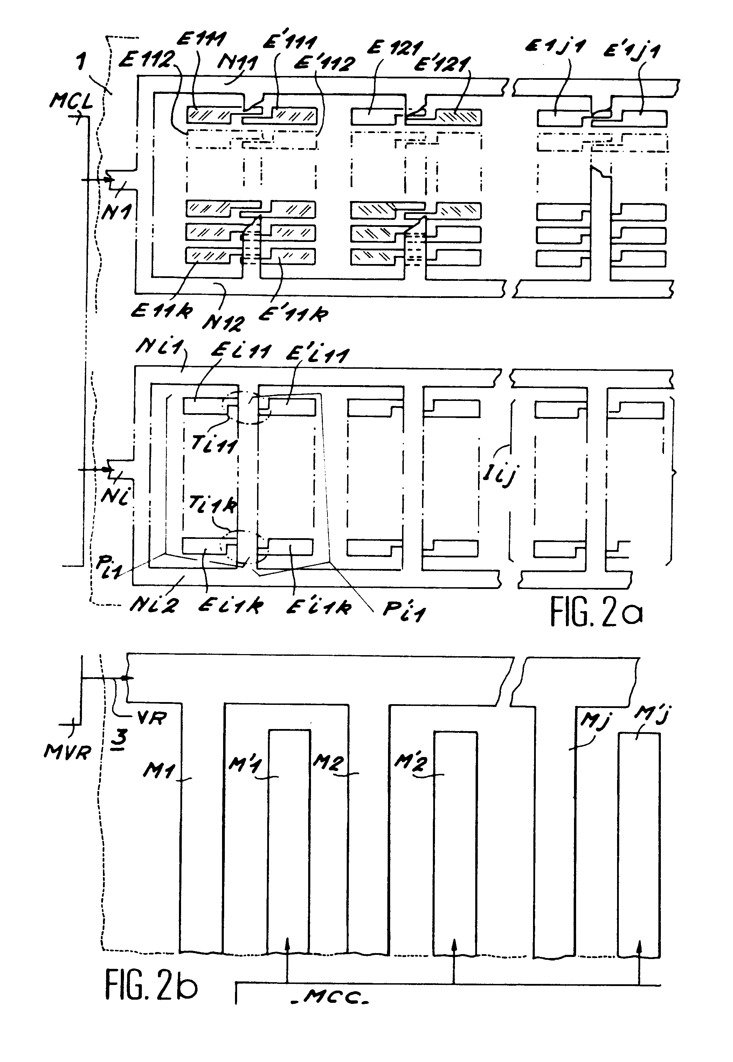

La figure 2a représente la première paroi 1 d'un dispositif d'affichage conforme à l'invention. Sur la face interne de cette paroi sont disposés n conducteurs lignes parallèles notés $N_i$, chaque conducteur ligne $N_i$ se divisant en une première et en une deuxième parties conductrices $N_{i1}$ et $N_{i2}$, avec i entier tel que $1 \leq i \leq n$. Une première famille de n.m.k électrodes et une deuxième famille de k.m.n électrodes sont disposées également sur la face interne de cette paroi. Les n.m.k électrodes de la première famille, notées $E_{ijl}$, sont regroupées en m.n paquets notés $P_{ij}$, comportant respectivement k électrodes parallèles de la première famille ; de même les n.m.k électrodes de la deuxième famille, notées $E'_{ijl}$ sont regroupées en m.n paquets, notés $P'_{ij}$, comportant respectivement k électrodes parallèles de la deuxième famille, avec i, j, k entiers tels que $1 \leq i \leq n$, $1 \leq j \leq m$ et $1 \leq l \leq k$.

Chaque conducteur ligne $N_i$ est associé par l'intermédiaire de ses parties conductrices $N_{i1}$ et $N_{i2}$ à m paquets d'électrodes de la première famille et à m paquets d'électrodes de la deuxième famille. Les paquets d'électrodes de la première et de la deuxième familles sont disposés alternativement sur la paroi 1 entre les parties conductrices $N_{i1}$ et $N_{i2}$, les électrodes desdits paquets étant disposées parallélement aux parties conductrices $N_{i1}$ et $N_{i2}$.

Par ailleurs, chaque électrode $E_{ijl}$ d'un paquet $P_{ij}$ et chaque électrode $E'_{ijl}$ d'un paquet $P'_{ij}$ sont reliées entre elles et au conducteur ligne $N_i$ correspondant par un interrupteur $T_{ijl}$ tel qu'un transistor en couche mince. Dans le reste du texte, on décrira l'exemple particulier d'un dispositif d'affichage utilisant des transistors. La grille du transistor $T_{ijl}$ est reliée au conducteur ligne $N_i$, la deuxième borne de ce transistor est reliée à l'électrode $E_{ijl}$ et la troisième borne de ce transistor est reliée à l'électrode $E'_{ijl}$ ; la deuxième et la troisième bornes du transistor sont respectivement la source et le drain de celui-ci ou bien indifféremment le drain et la source.

L'ensemble des transistors $T_{ij1}$, ..., $T_{ijk}$ associés aux électrodes $E_{ij1}$, ..., $E_{ijk}$ du paquet $P_{ij}$ et aux électrodes $E'_{ij1}$, ..., $E'_{ijk}$ du paquet $P'_{ij}$ sont reliés ensemble par leurs grilles. Ils sont connectés par ailleurs au conducteur ligne $N_i$ par l'intermédiaire du transistor $T_{ij1}$ et du transistor $T_{ijk}$, reliés par leurs grilles respectivement aux parties $N_{i1}$ et $N_{i2}$ de ce conducteur. Les transistors $T_{ij1}$, ..., $T_{ijk}$ ont donc une grille commune reliée au conducteur ligne $N_i$ par les parties $N_{i1}$ et $N_{i2}$ de ce conducteur. Les conducteurs lignes véhiculent des signaux électriques émis de manière classique par un moyen de commande de ligne MCL permettant de sélectionner soit l'état passant soit l'état bloquant des transistors qui leur sont associés.

La figure 2b représente la deuxième paroi 3 du dispositif d'affichage conforme à l'invention. Sur la face interne de cette paroi sont disposées une première famille de m conducteurs colonnes parallèles, notés $M_j$, portés à un potentiel de référence $V_R$ par un moyen de polarisation MVR et une deuxième famille de m conducteurs colonnes parallèles, notés $M'_j$, indépendants véhiculant des signaux électriques émis de manière classique par un moyen de commande de colonne MCC permettant d'exciter le matériau d'affichage du dispositif conforme à l'invention. Chaque conducteur colonne de la première famille est compris entre deux conducteurs de la deuxième famille et inversement.

Dans l'exemple de la figure, on a représenté les conducteurs colonnes de la première famille reliés entre eux et portés à un potentiel de référence $V_R$ et les conducteurs colonnes de la deuxième famille indépendants, on aurait pu tout aussi bien faire l'inverse.

Lorsque les faces internes des parois 1, 3 sont en regard l'une de l'autre, les conducteurs colonnes des première et deuxième familles sont croisés avec les conducteurs lignes. Chaque conducteur colonne $M_j$ de la première famille est en regard de n paquets $P_{1j}$, ..., $P_{nj}$ de k électrodes chacun de la première famille et chaque conducteur colonne $M'_j$ de la deuxième famille est en regard de n paquets $P'_{1j}$, ..., $P'_{nj}$ de k électrodes chacun de la deuxième famille, chaque paquet $P_{ij}$ et chaque paquet $P'_{ij}$ étant reliés par k transistors $T_{ij1}$, ..., $T_{ijk}$ au conducteur ligne $N_i$ par l'intermédiaire des parties conductrices $N_{i1}$ et $N_{i2}$.

Un élément image $I_{ij}$ d'un dispositif d'affichage conforme à l'invention est donc défini par la zone de recouvrement entre les k électrodes $E_{ij1}$, ..., $E_{ijk}$ d'un paquet $P_{ij}$ et le conducteur colonne $M_j$ et entre les k électrodes $E'_{ij1}$, ..., $E'_{ijk}$ d'un paquet $P'_{ij}$ et le conducteur colonne $M'_j$, chaque électrode $E_{ijl}$ et chaque électrode $E'_{ijl}$ étant reliées ensemble et au conducteur ligne $N_i$ par un transistor $T_{ijl}$ ; on aurait tout aussi bien pu définir un élément image $I_{ij}$ par la zone de recouvrement de k électrodes $E_{ij1}$, ..., $E_{ijk}$ et du conducteur colonne $M'_j$ et de k électrodes $E'_{ij1}$, ..., $E'_{ijk}$ et du conducteur colonne $M_j$.

Autrement dit, un élément image $I_{ij}$ est formé de k points image $I_{ij1}$, ..., $I_{ijk}$ ; chaque point image $I_{ijl}$ est défini par la zone de recouvrement de l'électrode $E_{ijl}$ et du conducteur colonne $M_j$ et de l'électrode $E'_{ijl}$ et du conducteur colonne $M'_j$.

Lorsque le dispositif d'affichage conforme à l'invention est regardé par transmission, les parois 1, 3 sont transparentes ainsi que les électrodes et les conducteurs colonnes. En revanche, lorsque le dispositif d'affichage conforme à l'invention est regardé par réflexion, il suffit que la paroi la plus près de l'observateur soit transparente ainsi que les conducteurs colonnes ou les électrodes associés à cette paroi ; mais bien entendu, les parois 1, 3, les conducteurs colonnes et les électrodes du dispositif d'affichage peuvent être transparents. Le matériau transparent constituant les électrodes et/ou les conducteurs colonnes, est par exemple de l'oxyde d'indium.

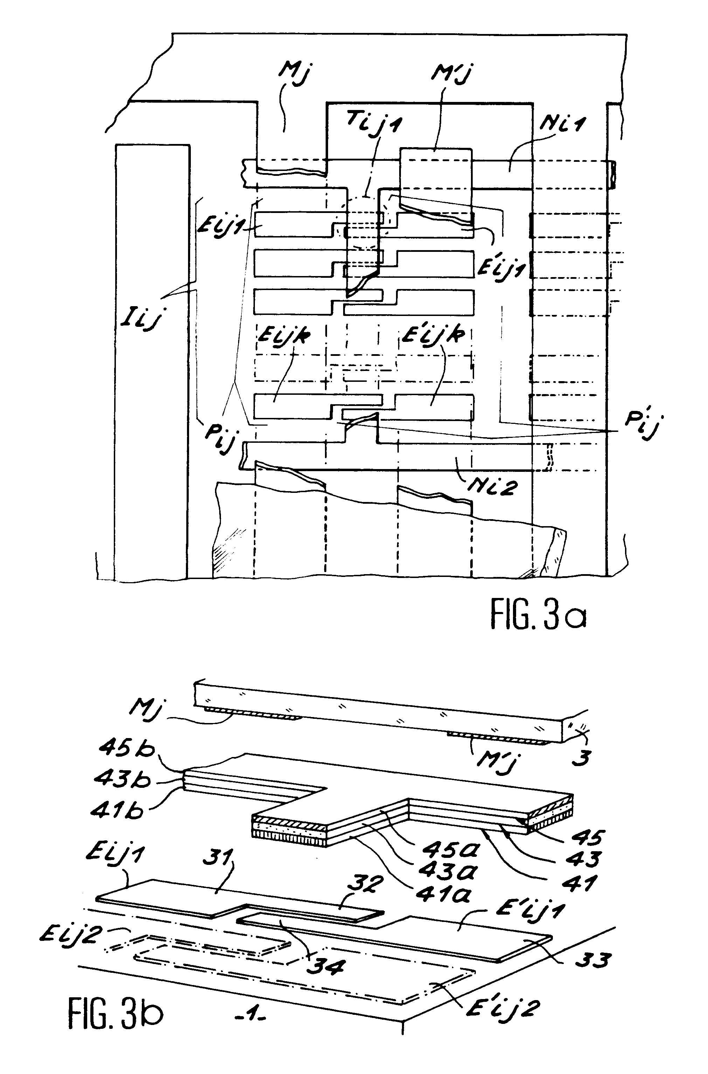

La figure 3a représente un élément image $I_{ij}$ d'un dispositif d'affichage conforme à l'invention et la figure 3b une coupe éclatée de cet élément image.

Un paquet $P_{ij}$ de k électrodes $E_{ij1}$, ..., $E_{ijk}$ de la première famille et un paquet $P'_{ij}$ de k électrodes $E'_{ij1}$, ..., $E'_{ijk}$ de la deuxième famille sont en regard respectivement d'un conducteur colonne $M_j$ de la première famille et d'un conducteur colonne $M'_j$ de la deuxième famille avec i, j entiers tels que $1 \leq i \leq n$ et $1 \leq j \leq m$. Les électrodes $E_{ij1}$, ..., $E_{ijk}$ du paquet $P_{ij}$ sont parallèles entre elles et comprises entre les parties $N_{i1}$ et $N_{i2}$ du conducteur ligne $N_i$ ; il en est de même des électrodes $E'_{ij1}$, ..., $E'_{ijk}$ du paquet $P'_{ij}$.

Chaque électrode $E_{ijl}$ de la première famille et chaque électrode $E'_{ijl}$ de la deuxième famille avec l entier tel que $1 \leq l \leq k$, est formée par un pavé conducteur rectangulaire 31, 33 et par une excroissance 32, 34 également conductrice (figure 3b). Les excroissances des électrodes $E_{ijl}$ et $E'_{ijl}$ correspondant à un point image sont complémentaires de façon à être juxtaposées et parallèles entre elles. Pour cela, la largeur de chaque excroissance est par exemple inférieure à la demi-largeur d'un pavé conducteur.

Par ailleurs, le conducteur colonne $M_j$ est en regard du pavé conducteur 31 de l'électrode $E_{ijl}$ et le conducteur colonne $M'_j$ est en regard du pavé conducteur 33 de l'électrode $E'_{ijl}$.

Les excroissances 32, 34 des électrodes $E_{ijl}$ et $E'_{ijl}$ d'un point image sont recouvertes au moins en partie par trois couches superposées : une couche 41a d'un matériau semi-conducteur telle qu'une couche de silicium amorphe, une couche 43a d'un matériau isolant telle qu'une couche d'un oxyde ou de nitrure de silicium et d'une couche 45a d'un matériau conducteur telle qu'une couche d'aluminium ou de chrome.

De façon avantageuse, entre les excroissances 32, 34 des électrodes et la couche 41a est intercalée une couche de silicium amorphe dopé de l'ordre de 200 angströms, pour diminuer les résistances de contact entre la couche 41a et les excroissances 32, 34. Les trois couches 41a, 43a, 45a, avec les excroissances 32, 34 des électrodes $E_{ijl}$ et $E'_{ijl}$ d'un point image $I_{ijl}$ constitue le transistor $T_{ijl}$ associé à ce point image ; les excroissances 32, 34 forment indifféremment la source et le drain de ce transistor et la couche 45a la grille de celui-ci.

Ces trois couches 41a, 43a, 45a sont disposées sur l'ensemble des excroissances des électrodes $E_{ij1}$, ..., $E_{ijk}$ et $E'_{ij1}$, ..., $E'_{ijk}$ d'un élément image de façon à ce que l'ensemble des transistors $T_{ij1}$, ..., $T_{ijk}$ associés à ces électrodes soient reliés ensemble par leurs grilles, autrement dit aient une grille commune formée par la couche 45a.

Par ailleurs, une couche 41b de matériau semi-conducteur, une couche 43b de matériau isolant et une couche 45b de matériau conducteur sont également disposées sur la paroi 1, de façon à former les conducteurs lignes, notés $N_i$, divisés respectivement en deux parties $N_{i1}$ et $N_{i2}$. Ainsi, de part et d'autre des paquets $P_{ij}$ et $P'_{ij}$ d'un élément image sont disposés perpendiculairement aux couches 41a, 43a, 45a disposées sur les excroissances des électrodes correspondant à cet élément image et en contact avec ces couches, les couches 41b, 43b et 45b. Ainsi, la grille du transistor $T_{ij1}$ d'un élément image est reliée électriquement à la couche conductice 45b de la partie $N_{i1}$ du conducteur

ligne $N_i$ et la grille du transistor $T_{ijk}$ est reliée électriquement à la couche conductrice 45b de la partie $N_{i2}$ du conducteur ligne $N_i$.

La couche 41a et la couche 41b sont réalisées de préférence en même temps et avec le même matériau. Ces deux couches constituent donc une couche unique référencée 41. Il en est de même des couches 43a et 43b qui constituent une couche unique, référence 43 et des couches 45a et 45b qui constituent une couche unique, référencée 45.

Ainsi par exemple, après avoir réalisé l'ensemble des électrodes du dispositif d'affichage sur la paroi 1 par dépôt d'une couche métallique puis par gravure à travers un masque approprié de cette couche, on dépose successivement une couche de matériau semi-conducteur, une couche de matériau isolant et une couche de matériau conducteur sur la paroi 1 par dessus les électrodes. On grave ensuite à travers un masque approprié ces trois couches pour obtenir les couches 41, 43, 45 superposées formant les conducteurs lignes du dispositif et, avec les excroissances des électrodes du dispositif, les transistors de ce dispositif. La réalisation d'un tel dispositif d'affichage comporte donc seulement deux niveaux de masquage.

Cet exemple de réalisation n'est bien entendu pas limitatif. En effet, de façon avantageuse, les conducteurs lignes $N_i$ peuvent être formés uniquement par la couche 45b de matériau conducteur reliée à la couche 45a. Dans ce cas, la réalisation des électrodes et des couches 41a, 43a, 45a et 45b nécessite trois niveaux de masquage.

La redondance des points images par élément image dans un dispositif d'affichage conforme à l'invention permet d'intégrer d'éventuels points image défectueux, autrement dit de ne pas visualiser les points images défecteux, à condition, comme on le verra ultérieurement que le pas entre électrodes d'un même paquet soit inférieur ou égal à une valeur de seuil. En effet, si un transistor $T_{ijl}$ d'un élément image $I_{ij}$ est défectueux, il n'aura aucun effet sur les autres transistors des points images associés à cet élément image du fait que seule sa grille est reliée aux grilles des autres transistors. En effet, un court-circuit entre la grille et une excroissance 32 ou 34 porte le pavé correspondant 31 ou 33 à la tension grille mais ne modifie pas la valeur de la tension grille.

La figure 3c représente le schéma électrique équivalent d'un élément image $I_{ij}$.

L'électrode $E_{ijl}$ d'un point image $I_{ijl}$ et le conducteur colonne $M_j$ forment les armatures d'un condensateur $C_{ijl}$ dont le matériau d'affichage intercalé entre ces armatures forment le diélectrique. Il en est de même de l'électrode $E'_{ijl}$ du point image $I_{ijl}$ et du conducteur $M'_j$ qui forment les armatures du condensateur $C'_{ijl}$. Chaque point image $I_{ijl}$ est

donc équivalent à deux condensateurs $C_{ijl}$ et $C'_{ijl}$. Les conducteurs colonnes $M_j$ et $M'_j$ en regard respectivement des électrodes $E_{ij1}$, ..., $E_{ijk}$ et $E'_{ij1}$, ..., $E'_{ijk}$, forment respectivement une armature commune à l'ensemble des condensateurs $C_{ij1}$, ..., $C_{ijk}$ et à l'ensemble des condensateurs $C'_{ij1}$, ..., $C'_{ijk}$.

Par ailleurs, sur cette figure sont représentés les transistors $T_{ij1}$, ..., $T_{ijk}$ associés respectivement aux électrodes $E_{ij1}$, $E'_{ij1}$; ...; $E_{ijk}$ $E'_{ijk}$ des point images $I_{ij1}$, ..., $I_{ijk}$. Les grilles de ces transistors sont reliées entre elles et au conducteur ligne $N_i$ par l'intermédiaire de la partie $N_{i1}$ de ce conducteur, relié à la grille du transistor $T_{ij1}$ et de la partie $N_{i2}$ de ce conducteur, reliée à la grille du transistor $T_{ijk}$.

La commande d'un élément image $I_{ij}$ est réalisée de la même façon que la commande d'un point image décrit dans le document FR-A-2581783 déjà cité. Cependant, au lieu de sélectionner l'état passant d'un seul transistor associé à un point image, on sélectionne l'état passant de l'ensemble des transistors correspondant aux points images d'un élément image du dispositif d'affichage conforme à l'invention.

Ainsi, pour commander la propriété optique du matériau à l'élément image $I_{ij}$, autrement dit aux points image $I_{ij1}$, ..., $I_{ijk}$, on applique sur le conducteur ligne $N_i$ un potentiel $V_{Gi}$ pour sélectionner l'état passant des transistors $T_{ij1}$, ..., $T_{ijk}$ associés à cet élément et sur les conducteurs colonnes $M_j$ et $M'_j$ les potentiels $V_R$ et $V_{Fj}$ tels que $V_{Gi} > V_R$, $V_{Gi} > V_{Fj}$ et $V_{Fj} \neq V_R$ pendant un temps ligne $T_l = T/n$ et $V_{Gi} < V_R$ et $V_{Gi} < V_{Fj}$ en dehors de ce temps ligne, T étant la période d'adressage d'un élément image et n le nombre de lignes du dispositif ; par ailleurs on applique pendant le temps ligne $T_l$ sur les autres conducteurs lignes un potentiel $V_{GS}$ pour bloquer l'ensemble des transistors associés à ces conducteurs lignes et sur les autres conducteurs colonnes les potentiels $V_R$ et $V_{Fk}$, tels que $V_{GS} < V_R$, $V_{GS} < V_{Fk}$ et $V_{GS} < V_{Gi}$. La différence de potentiel entre les armatures des condensateurs $C_{ij1}$, $C'_{ij1}$; ...; $C_{ijk}$, $C'_{ijk}$ correspondant à cet élément image $I_{ij}$ est donc égale $(V_{Fj} - V_R)/2$.

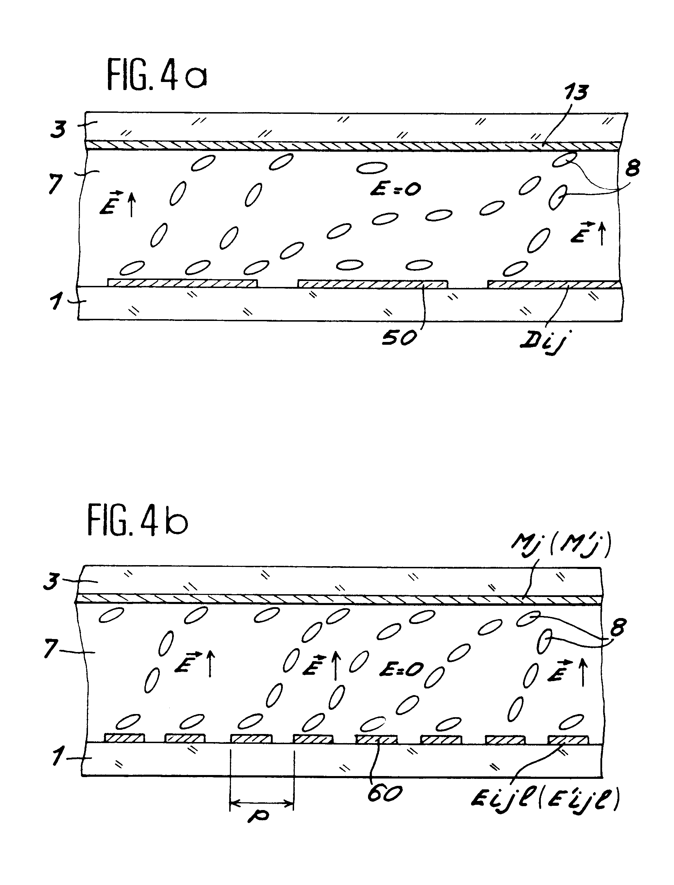

Les figures 4a et 4b représentent schématiquement en coupe, respectivement un dispositif d'affichage connu et un dispositif d'affichage conforme à l'invention.

Sur la figure 4a un point image ou un élément image est défini par la zone du matériau d'affichage notamment de cristal liquide intercalé entre une électrode $D_{ij}$ et la contre électrode 13 alors que sur la figure 4b, un point image $I_{ijl}$ est défini par la zone du matériau d'affichage intercalée entre les électrodes $E_{ijl}$, $E'_{ijl}$ et les conducteurs colonnes $M_j$, $M'_j$, un élément image $I_{ij}$ étant défini par les k points image $I_{ij1}$, ..., $I_{ijk}$. Etant donné que la figure 4b est une coupe schématique du dispositif d'affichage conforme à l'invention suivant la largeur des électrodes, une seule des électrodes $E_{ijl}$ ou $E'_{ijl}$ ainsi qu'un seul des conducteurs colonnes $M_j$ ou $M'_j$ y sont représentés.

Lorsqu'un cham électrique est créé entre une électrode $D_{ij}$ et l'électrode 13, les molécules 8 du matériau d'affichage 7 telles que des molécules de cristal liquide s'orientent par rapport à ce champ. Lorsqu'une électrode 50 est défectueuse, il n'y a pas de champ électrique entre cette électrode 50 et la contre électrode 13, les molécules intercalées entre l'électrode 50 et la contre électrode 13 ne s'orientent pas et le point image défectueux correspondant à l'électrode 50 sera visualisé par un observateur.

En revanche, dans le dispositif d'affichage conforme à l'invention, le pas p entre une extrémité d'une électrode $E_{ijl}$ ou $E'_{ijl}$ et la même extrémité d'une électrode voisine, par exemple $E_{ij(l+1)}$ ou $E'_{ij(l+1)}$ est inférieur ou égal à une valeur de seuil permettant d'intégrer un point image défectueux aux autres points images du même élément image. De ce fait, la largeur de chaque électrode d'un élément image est très inférieure à celle d'une électrode d'un élément ou point image d'un dispositif connu et les différentes électrodes d'un paquet d'un élément image sont très proches les unes des autres.

Ainsi, lorsqu'un point image correspondant à une électrode 60 est défectueux, le champ électrique entre les électrodes $E_{ijl}$, $E'_{ijl}$ et les conducteurs colonnes $M_j$, $M'_j$ correspondant à ce point image est nul. Cependant, les molécules 8 du matériau 7 intercalées entre les électrodes et les conducteurs colonnes correspondant à ce point image défectueux subissent les champs électriques des points images voisins. Les molécules du point image défectueux tendent donc à avoir la même orientation que celle des molécules des points images voisins ; de plus les points image d'un élément image étant très rapprochés, un observateur ne peut visualiser la différence entre un point image mauvais et un point image bon.

La valeur de seuil du pas permettant d'intégrer un point image mauvais autrement dit de ne pas visualiser un point image défectueux dépend de l'épaisseur du dispositif d'affichage, c'est-à-dire de l'épaisseur entre les deux faces externes des parois 1, 3, des constantes électriques du matériau d'affichage, des tensions appliquées aux conducteurs lignes et colonnes, de l'anisotropie diélectrique du matériau d'affichage et enfin de la nature de l'ancrage des molécules du matériau d'affichage aux parois.

A titre d'exemples, pour des épaisseurs de dispositif d'affichage à cristal liquide de l'ordre de 5 à 10$\mu$m, pour des constantes électriques du cristal liquide de 4 à 20 dans le système CGS, pour des tensions appliquées aux conducteurs lignes et colonnes de l'ordre de 5 Volts, pour une anisotropie diélectrique du cristal liquide de -5 à 10 dans le système CGS et pour des ancrages planaires ou homéotropes, l'intégration est effective lorsque le pas entre deux électrodes voisines d'un même paquet est inférieure à 100$\mu$m, par exemple égal à 10$\mu$m.

Les effets électro-optiques compatibles avec l'effet intégrateur du dispositif d'affichage conforme à l'invention, sont notamment le nématique en hélice, l'effet de biréfringence contrôle électriquement, les effets de dichromie en orientation homogène aussi bien planaire qu'homéotrope ou hybride.

Le dispositif d'affichage conforme à l'invention permet donc d'éviter la visualisation d'éléments et de points images défectueux par la redondance de points images par élément image, et par un pas entre points images d'un élément image inférieur ou égal à une valeur seuil, sans augmenter le nombre d'étapes de réalisation du dispositif d'affichage par rapport à celui d'un dispositif connu et sans test en cours de fabrication. Par ailleurs, le redondance de la commande des grilles des transistors d'une ligne d'éléments image par les deux parties du conducteur ligne correspondant, évite la déficience de toute la ligne d'éléments image correspondante, en cas de coupure d'une de ces parties.

L'exemple de réalisation du dispositif d'affichage conforme à l'invention décrit précédemment n'est bien entendu pas limitatif. En effet, de nombreuses variantes peuvent être réalisées sans pour autant sortir du cadre de l'invention telle que revendiquée.

## Revendications

1. Dispositif d'affichage matriciel comprenant un matériau électro-optique possédant une propriété optique, intercalé entre une première et une deuxième parois (1, 3) isolantes dont l'une au moins est transparente, maintenues écartées l'une de l'autre, sur la face interne de la première paroi (1) étant disposés n conducteurs lignes ($N_i$) parallèles, caractérisé en ce que chaque conducteur ligne est relié par k.m interrupteurs à k.m électrodes d'une première famille regroupées en m paquets de k électrodes parallèles chacun et à k.m électrodes d'une deuxième famille regroupées en m paquets de K électrodes parallèles chacun, les m paquets d'électrodes de la première famille et les m paquets d'électrodes de la deuxième famille étant juxtaposés audit conducteur ligne et alternés entre eux de façon à ce que chaque électrode $E_{ijl}$ d'un paquet $P_{ij}$ d'électrodes de la première famille et chaque électrode $E'_{ijl}$

d'un paquet $P'_{ij}$ d'électrodes de la deuxième famille soient reliées par un interrupteur $T_{ijl}$ à un conducteur ligne N avec i, j, l entiers tels que $1 \leq i \leq n$, $1 \leq j \leq m$ et $1 \leq l \leq k$, $k \geq 1$, $n \geq 1$ et $m \geq 1$, en ce que sur la face interne de la deuxième paroi (3) sont disposées une première famille de m conducteurs colonnes ($M_j$) parallèles et une deuxième famille de m conducteurs colonnes ($M'_j$) parallèles, les conducteurs colonnes de la deuxième famille étant alternés avec les conducteurs colonnes de la première famille, une des deux familles des conducteurs colonnes étant portée à un potentiel de référence ($V_R$) par un moyen de polarisation (MVR), les conducteurs colonnes des première et deuxième familles étant croisés avec les conducteurs lignes, chaque conducteur colonne de la première famille est en regard de n paquets d'électrodes de la première famille et chaque conducteur colonne de la deuxième famille est en regard de n paquets d'électrodes de la deuxième famille, un élément image ($I_{ij}$) étant défini par la zone de recouvrement de deux conducteurs colonnes ($M_j$, $M'_j$) respectivement de la première et de la deuxième familles avec respectivement un paquet ($P_{ij}$) de k électrodes de la première famille et un paquet ($P'_{ij}$) de k électrodes de la deuxième famille reliées par k interrupteurs au conducteur ligne ($N_i$) correspondant, lesdits conducteurs véhiculant des signaux appropriés à l'excitation du matériau émis par des moyens de commande de ligne (MCL) et de colonne (MCC), lesdites moyens de commande comportant des circuits pour commander la propriété optique du matériau à l'élément image $I_{ij}$ avec i, j entiers tels que $1 \leq i \leq n$ et $1 \leq j \leq m$, lesquels circuits sont destinés à appliquer sur le conducteur ligne $N_i$ un potentiel $V_{Gi}$ et sur les conducteurs colonnes $M_j$ et $M'_j$ des première et deuxième familles , les potentiels $V_R$ et $V_{Fj}$, $V_{Gi}$ étant tel que pendant un temps ligne $Tl = T/n$, T étant la période d'adressage d'un élément image, ce potentiel permet la conduction de l'interrupteur, quels que soient $V_R$ et $V_{Fj}$, et en assure le blocage le reste du temps ligne Tl, et à appliquer pendant le temps ligne Tl sur les autres conducteurs lignes un potentiel $V_{GS}$ tel qu'il assure le blocage de tous les interrupteurs de ces lignes quels que soient les potentiels appliqués sur les conducteurs colonnes.

2. Dispositif d'affichage selon la revendication 1, caractérisé en ce que le matériau électro-optique est un film de cristal liquide dont la propriété optique dépend du champ électrique qui lui est appliqué.

3. Dispositif d'affichage selon l'une quelconque des revendications 1 et 2, caractérisé en ce que chaque interrupteur $T_{ijl}$ avec i, j, l entiers tels que $1 \leq i \leq n$, $1 \leq j \leq m$ et $1 \leq l \leq k$ est un transistor en couche mince dont la grille est reliée au conducteur ligne $N_i$ dont la deuxième borne est reliée à l'électrode $E_{ijl}$ du paquet $P_{ij}$ et dont la troisième borne est connectée à l'électrode $E'_{ijl}$ du paquet $P'_{ij}$.

4. Dispositif d'affichage selon la revendication 3, caractérisé en ce que l'ensemble des transistors ($T_{ij1}$, ..., $T_{ijk}$) associés aux électrodes ($E_{ij1}$,$E'_{ij1}$; ..., $E_{ijk}$, $E'_{ijk}$) des première et deuxième familles correspondant à un élément image ($I_{ij}$) sont reliés ensemble par leur grille, au moins un desdits transistors ($T_{ij1}$, $T_{ijk}$) étant relié en outre par sa grille au conducteur ligne ($N_i$) correspondant.

5. Dispositif d'affichage selon l'une quelconque des revendications 3 et 4, caractérisé en ce que chaque conducteur ligne ($N_i$) se divisant en une première et en une deuxième parties ($N_{i1}$, $N_{i2}$) disposées de part et d'autre des m paquets d'électrodes de la première famille et des m paquets d'électrodes de la deuxième famille auxquelles il est relié, les transistors associés aux électrodes des première et deuxième familles correspondant à un élément image, reliées entre eux par leur grille, sont reliés en outre par la grille du transistor associé à l'électrode de la première et à l'électrode de la deuxième familles juxtaposées à la première partie du conducteur ligne, à cette première partie et par la grille du transistor associé à l'électrode de la première et à l'électrode de la deuxième familles juxtaposées à la deuxième partie du conducteur ligne, à cette deuxième partie.

6. Dispositif d'affichage matriciel selon l'une quelconque des revendications 3 à 5, caractérisé en ce que les électrodes ($E_{ij1}$, ..., $E_{ijk}$ ; $E'_{ij1}$, ..., $E'_{ijk}$) des première et deuxième familles de chaque élément image sont formées respectivement par un pavé conducteur (31, 33) et par une excroissance conductrice (32, 34), l'excroissance (33) d'une électrode ($E_{ijl}$) de la première famille étant parallèle et juxtaposée à l'excroissance (34) de l'électrode ($E_{ijl}$) de la deuxième famille avec laquelle elle est associée, l'ensemble des excroissances des électrodes des première et deuxième familles sont recouvertes au moins en partie successivement par une couche d'un matériau semi-conducteur (41a), par une couche d'un matériau isolant (43a) et par une couche d'un matériau conducteur (45a), ces trois couches (41a, 43a, 45a) formant avec les excroissances (32, 34) des électrodes du dispositif, les transistors du dispositif.

7. Dispositif d'affichage matriciel selon la revendication 6, caractérisé en ce que le matériau semi-conducteur est du silicium amorphe.

8. Dispositif d'affichage selon l'une quelconque des revendications 6 et 7, caractérisé en ce qu'entre les excroissances des électrodes des première et deuxième familles et la couche de matériau semi-conducteur est intercalée une couche de silicium amorphe dopé.

9. Dispositif d'affichage selon l'une quelconque des revendications 1 à 8, caractérisé en ce que les conducteurs colonnes et/ou les électrodes des première et deuxième familles sont en un matériau conducteur transparent.

10. Dispositif d'affichage matriciel selon l'une quelconque des revendications 1 à 9, caractérisé en ce que le pas entre les électrodes d'un même paquet est inférieur ou égal à une valeur seuil correspondant au pas maximum permettant d'intégrer un défaut associé à une électrode de la première famille et à une électrode de la deuxième famille reliées par un interrupteur.

**Claims**

1. Matrix display device comprising an electro-optical material having an optical property inserted between first and second insulating walls (1, 3), whereof at least one is transparent and which are kept spaced from one another on the inner face of the first wall (1) being arranged n parallel row conductors, characterized in that each row conductor is connected by k.m switches to k.m electrodes of a first family grouped into m groups of k parallel electrodes each and k.m electrodes of a second family grouped into m groups of k parallel electrodes each, the m groups of electrodes of the first family and the m groups of electrodes of the second family being juxtaposed with said row conductor and alternating with one another in such a way that each electrode $E_{ijl}$ of a group $P_{ij}$ of electrodes of the first family and each electrode $E'_{ijl}$ of a group $P'_{ijl}$ of electrodes of the second family are connected by a switch $T_{ijl}$ to a row conductor $N_i$ with i, j and l being integers such that $1 \leq i \leq n$, $1 \leq j \leq m$ and $1 \leq l \leq k$ and in that on the inner face of the second wall (3) are arranged a first family of m parallel column conductors ($M_j$) and a second family of m parallel column conductors ($M'_j$), the column conductors of the second family alternating with the column conductors of the first family, one of the two families of column conductors being raised to a reference potential ($V_R$) by a polarizing means (MVR), the column conductors of the first and second families intersecting with the row conductors, each column conductor of the first family facing n groups of electrodes of the first family and each column conductor of the second family facing n groups of electrodes of the second family, an image element ($I_{ij}$) being defined by the overlap zone of two column conductors (M , M' ) respectively of the first and second families with respectively a group ($P_{ij}$) of k electrodes of the first family and a group ($P'_{ij}$) of k electrodes of the second family connected by k switches to the corresponding row conductor ($N_i$), said conductors carrying appropriate signals for the excitation of the material emitted by the row (MCL) and column (MCC) control means, said control means incorporating circuits for controlling the optical property of the material at the image element $I_{ij}$ with i and j being integers such that $1 \leq i \leq n$ and $1 \leq j \leq m$, said circuits serving to apply to the row conductor $N_i$ a potential $V_{Gi}$ and to the column conductors $M_j$ and '$_j$ of the first and second families, the potentials $V_R$ and $V_{Fj}$, $V_{Gi}$ being such that during a row time Tl = T/n, T being the addressing period of an image element, said potential permits the conduction of the switch, no matter what the values of $V_R$ and $V_{Fj}$ and ensures the blocking for the remainder of the row time Tl, whilst applying for the row time Tl to the other row conductors a potential V , such as to ensure the blocking of all the switches of said rows no matter what the potentials applied to the column conductors.

2. Display device according to claim 1, characterized in that the electro-optical material is a laid crystal film, whose optical property is dependent on the electrical field applied thereto.

3. Display device according to either of the claims 1 and 2, characterized in that each switch $T_{ijl}$ with i, j and l being integers such that $1 \leq i \leq n$, $1 \leq j \leq m$ and $1 l k$ is a thin film transistor, whose gate is connected to the row conductor $N_i$, whereof the second terminal is connected to electrode $E_{ijl}$ of group $P_{ij}$ and whereof the third terminal is connected to electrode $E'_{ijl}$ of group $P'_{ij}$.

4. Display device according to claim 3, characterized in that the set of transistors ($T_{ij1}$ ... $T_{ijk}$) associated with the electrodes ($E_{ij1}$, $E'_{ij1}$... $E'_{ijk}$, $E'_{ijk}$) of the first and second families corresponding to an image element ($I_{ij}$) are interconnected by their gate, at least one of the said transistors ($T_{ij1}$, $T_{ijk}$) also being connected by its gate to the corresponding row conductor ($N_i$).

5. Display device according to any one of the claims 3 and 4, characterized in that each row conductor ($N_i$) is subdivided into first and second parts ($N_{i1}$, $N_{i2}$) located on either side of the m groups of electrodes of the first family and the m groups of electrodes of the second family to which it is connected, the transistors associated with the electrodes of the first and second families corresponding to an image element, which are interconnected by their gate, are also connected by the gate of the transistor associated with the electrode of the first and the electrode of the second family juxtaposed with the first part of the row conductor to said first part and by the gate of the transistor associated with the electrode of the first and with the electrode of the second families juxtaposed with the second part of the row conductor to said second part.

6. Display device according to any one of the claims 3 to 5, characterized in that the electrodes ($E_{ij1}$, ..., $E_{ijk}$; $E'_{ij1}$, ..., $E'_{ijk}$) of the first and second families of each image element are respectively formed by a conductive block (31, 33) and by a conductive excrescence or outgrowth (32, 34), the outgrowth (33) of an electrode ($E_{ijl}$) of the first family being parallel and juxtaposed with the outgrowth (34) of the electrode ($E'_{ijl}$) of the second family with which it is associated, the set of outgrowths of the electrodes of the first and second families being at least partly covered, successively by a layer of semi-conductive material (41a), by a layer of an insulating material (43a) and by a layer of a conductive material (45a), said three layers (41a, 43a, 45a) forming with the outgrowths (32, 34) of the electrodes of the means the transistors thereof.

7. Display device according to clam 6, characterized in that the semi-conductor material is amorphous silicon.

8. Display device according to either of the claims 6 and 7, characterized in that a doped amorphous silicon layer is inserted between the outgrowths of the electrodes of the first and second families and the layer of semi-conductive material.

9. Display device according to any one of the clams 1 to 8, characterized in that the column conductors and/or electrodes of the first and second families are made from a transparent conductive material.

10. Display device according to any one of the claims 1 to 9, characterized in that the spacing between the electrodes of the same group is equal to or less than a threshold value corresponding to the maximum spacing making it possible to integrate a fault associated with an electrode of the first family and an electrode of the second family connected by a switch.

**Patentansprüche**

1. Matrixanzeigevorrichtung mit einem elektro-optischen Material, das eine optische Eigenschaft besitzt und zwischen einer ersten und einer zweiten isolierenden Wand (1, 3) angeordnet ist, von denen wenigstens eine transparent ist und die voneinander getrennt gehalten werden, wobei auf der Innenseite der ersten Wand (1) n parallele Zeilenleiter ($N_i$) angeordnet sind, dadurch gekennzeichnet, daß jeder Zeilenleiter über k.m Schalter mit k.m Elektroden einer jeweils in m Pakete zu k parallelen Elektroden unterteilten ersten Familie und mit k.m Elektroden einer jeweils in m Pakete zu k parallelen Elektroden unterteilten zweiten Familie verbunden ist, wobei die m Elektrodenpakete der ersten Familie und die m Elektrodenpakete der zweiten Familie neben dem Zeilenleiter und miteinander abwechselnd angeordnet sind, so daß jede Elektrode $E_{ijl}$ eines Pakets $P_{ij}$ von Elektroden der ersten Familie und jede Elektrode $E'_{ijl}$ eines Pakets $P'_{ij}$ von Elektroden der zweiten Familie über einen Schalter $T_{ijl}$ mit einem Zeilenleiter N verbunden ist, wobei i, j, l ganze Zahlen sind mit $1 \leq i \leq n$, $1 \leq j \leq m$, $1 \leq l \leq k$, $k \geq 1$, $n \geq 1$ und $m \geq 1$, und dadurch daß auf der Innenseite der zweiten Wand (3) eine erste Familie von m parallelen Spaltenleitern ($M_j$) und eine zweite Familie von m parallelen Spaltenleitern ($M'_j$) angeordnet sind, wobei die Spaltenleiter der zweiten Familie sich mit den Spaltenleitern der ersten Familie abwechseln, wobei eine der beiden Familien von Spaltenleitern über eine Polarisationsvorrichtung (MVR) auf ein Bezugspotential ($V_R$) gelegt ist, wobei die Spaltenleiter der ersten und zweiten Familie mit den Zeilenleitern gekreuzt sind, wobei jeder Spaltenleiter der ersten Familie gegenüber den n Elektrodenpaketen der ersten Familie und jeder Spaltenleiter der zweiten Familie gegenüber den n Elektronenpaketen der zweiten Familie liegt, wobei ein Bildelement ($I_{ij}$) durch die Bedeckungszone der beiden Spaltenleiter ($M_j$, $M'_j$) jeweils der ersten und zweiten Familie mit jeweils einem Paket ($P_{ij}$) von k Elektroden der ersten Familie und einem Paket ($P'_{ij}$) von k Elektroden der zweiten Familie, die über k Schalter mit dem entsprechenden Zeilenleiter ($N_i$) verbunden sind, gebildet wird, wobei die Leiter Signale leiten, die zur Anregung des Materials geeignet sind und von Steuerungsvorrichtungen für die Zeilen (MCL) und für die Spalten (MCC) erzeugt werden, wobei die Steuerungsvorrichtungen Schaltkreise aufweisen, um die optische Eigenschaft des Materials am Bildelement $I_{ij}$ zu bestimmen, wobei i, j ganze Zahlen sind mit $1 \leq i \leq n$ und $1 \leq j \leq m$, wobei die Schaltkreise dazu bestimmt sind, an den Zeilenleiter $N_i$ ein Potential $V_{Gi}$ und an die Spaltenleiter $M_j$ und $M'_j$ der ersten und zweiten Familie die Potentiale $V_R$ und $V_{Fj}$ anzulegen, wobei $V_{Gi}$ derart ist, daß während einer Zeilenzeit $TI = T/n$, wobei T die Periode zur Adressierung eines Bildelements ist, dieses Potential das Leiten von entweder $V_R$ oder $V_{Fj}$ des Schalters ermöglicht und dessen Sperrung für den Rest der Zeilenzeit TI sicherstellt, und während der Zeilenzeit TI an die anderen Zeilenleiter ein Potential $V_{GS}$ anzulegen, das derart ist, daß es die Sperrung aller Schalter dieser Zeilen sicherstellt, unabhängig von den an die Spaltenleiter angelegten Potentiale.

2. Anzeigevorrichtung nach Anspruch 1, dadurch gekennzeichnet, daß das elektro-optische Material ein Flüssigkristallfilm ist, dessen optische Eigenschaft von dem an ihn angelegten elektrischen Feld abhängt.

3. Anzeigevorrichtung nach einem der Ansprüche 1 und 2, dadurch gekennzeichnet, daß jeder Schalter $T_{ijl}$, wobei i, j, l ganze Zahlen sind mit $1 \leq i \leq n$, $1 \leq j \leq m$, $1 \leq l \leq k$, ein Dünnfilmtransistor ist, dessen Gate mit der Zeilenelektrode $N_i$ verbunden ist, dessen zweiter Anschluß mit der Elektrode $E_{ijl}$ Pakets $P_{ij}$ und dessen dritter Anschluß mit der Elektrode $E'_{ijl}$ Pakets $P'_{ij}$ verbunden ist.

4. Anzeigevorrichtung nach Anspruch 3, dadurch gekennzeichnet, daß die mit den Elektroden ($E_{ij1}$, $E'_{ij1}$; ...; $E_{ijk}$, $E'_{ijk}$) der ersten und zweiten Familie, die einem Bildelement ($I_{ij}$) entsprechen, verbundene Anordnung von Transistoren ($T_{ij1}$, ..., $T_{ijk}$) über ihr Gate miteinander verbunden ist, wobei wenigstens einer der Transistoren ($T_{ij1}$, $T_{ijk}$) außerdem mit seinem Gate mit dem entsprechenden Zeilenleiter ($N_i$) verbunden ist.

5. Anzeigevorrichtung nach einem der Ansprüche 3 und 4, dadurch gekennzeichnet, daß, wenn jeder Zeilenleiter ($N_i$) sich in einen ersten und einen zweiten Teil ($N_{i1}$, $N_{i2}$) aufteilt, die auf der einen und der anderen Seite der m Elektrodenpakete der ersten Familie und der m Elektrodenpakete der zweiten Familie, mit denen er verbunden ist, angeordnet sind, die mit den Elektroden der ersten und zweiten Familie, die einem Bildelement entsprechen, verbundenen Transistoren, die untereinander über ihr Gate verbunden sind, außerdem über das Gate des mit der Elektrode der ersten und der Elektrode der zweiten Familie, die neben dem ersten Teil des Zeilenleiters angeordnet sind, verbundenen Transistors mit diesem ersten Teil und über das Gate des mit der Elektrode der ersten und der Elektrode der zweiten Familie, die neben dem zweiten Teil des Zeilenleiters angeordnet sind, verbundenen Transistors mit diesem zweiten Teil verbunden sind.

6. Matrixanzeigevorrichtung nach einem der Ansprüche 3 bis 5, dadurch gekennzeichnet, daß die Elektroden ($E_{ij1}$, $E'_{ij1}$; ..., $E_{ijk}$, $E'_{ijk}$) der ersten und zweiten Familie jedes Bildelements jeweils von einem Leiterfleck (31, 33) und von einer leitenden Ausstülpung (32, 34) gebildet werden, wobei die Ausstülpung (33) einer Elektrode ($E_{ijl}$) der ersten Familie parallel und neben der Ausstülpung (34) der Elektrode ($E'_{ijl}$) der zweiten mit ihr verbundenen Familie angeordnet ist, wobei die Anordnung der Ausstülpungen der Elektroden der ersten und zweiten Familie wenigstens zum Teil der Reihe nach von einem Schicht aus einem halbleitenden Material (41a), von einer Schicht aus einem isolierenden Material (43a) und von einer Schicht aus einem leitenden Material (45a) bedeckt ist, wobei diese drei Schichten (41a, 43a, 45a) mit den Ausstülpungen (32, 34) der Elektroden der Vorrichtung die Transistoren der Vorrichtung bilden.

7. Matrixanzeigevorrichtung nach Anspruch 6, dadurch gekennzeichnet, daß das halbleitende Material amorphes Silizium ist.

8. Anzeigevorrichtung nach einem der Ansprüche 6 und 7, dadurch gekennzeichnet, daß zwischen den Ausstülpungen der Elektroden der ersten und zweiten Familie und der Schicht aus halbleitenden Material eine Schicht aus dotiertem amorphem Silizium angeordnet ist.

9. Anzeigevorrichtung nach einem der Ansprüche 1 bis 8, dadurch gekennzeichnet, daß die Spaltenleiter und/oder die Elektroden der ersten und der zweiten Familie aus einem transparenten Leitermaterial bestehen.

10. Anzeigevorrichtung nach einem der Ansprüche 1 bis 9, dadurch gekennzeichnet, daß der Abstand zwischen den Elektroden eines selben Pakets kleiner oder gleich einem Schwellwert ist, der dem minimalen Abstand entspricht, der erlaubt, einen mit einer Elektrode der ersten Familie und einer Elektrode der zweiten Familie, die über einen Schalter verbunden sind, verbundenen Fehler, einzubeziehen.

FIG. 1

FIG. 3c

FIG. 2a

FIG. 2b

FIG. 3a

FIG. 3b

FIG. 4 a

FIG. 4 b